# EUROPEAN PATENT APPLICATION

(11) **EP 3 264 230 A1**
(43) Date of publication of application: **03.01.2018**
(21) Application number: 17177715.4
(22) Date of filing: 23.06.2017
(51) Int. Cl.: G06F 3/01, H04L 29/08

(54) **CLOUD CONNECTED HAPTIC PLATFORM**

(30) Priority: 01.07.2016 US 201615200476
(71) Applicant: Immersion Corporation, San Jose, CA 95134 (US)
(72) Inventor: DAUHAJRE, Abraham Alexander, Coral Springs, FL Florida 33071 (US); VENKATESAN, Srivatsav, Sunnyvale, CA California 94089 (US)
(74) Representative: Hofstetter, Schurack & Partner

(57) **Abstract**

A computer-based method for controlling a haptic actuator over a network is provided. The method includes, at a haptic server, receiving a selection of a haptic actuator connected to a haptic hardware support platform, receiving a selection of a haptic effect driver software package or library, receiving a selection of a haptic effect, creating a haptic command message including haptic actuator drive values, and transmitting the haptic command message to the haptic hardware support platform over the network. The haptic hardware support platform is configured to receive the haptic command message over the network, parse the haptic command message to extract the haptic actuator drive values, and apply a haptic actuator drive signal to the haptic actuator to play the selected haptic effect, the haptic actuator drive signal based on the haptic actuator drive values.

## Description

### TECHNICAL FIELD

One embodiment is directed generally to haptic effects, and, in particular, to electronic devices that produce haptic effects.

### BACKGROUND

Electronic devices, such as mobile devices, personal computers, home video game consoles, handheld video game consoles, microconsoles, etc., typically use visual and auditory cues to provide feedback to a user. In some electronic devices, kinesthetic feedback (e.g., active and resistive force feedback) and/or tactile feedback (e.g., vibration, texture, temperature variation, etc.) may be provided to the user. In general, such feedback is collectively known as "haptic feedback" or "haptic effects." Haptic effects provide cues that enhance a user's interaction with an electronic device, from augmenting simple alerts to specific events to creating a greater sensory immersion for the user within a simulated or virtual environment.

In general, an application executed by the operating system ("OS") or real time operating system ("RTOS") of the electronic device sends commands to one or more haptic actuators to generate haptic effects. For example, in response to specific events occurring during the execution of the application, or when a user interacts with a button, touchscreen, etc. of the electronic device or a separate input device coupled to the electronic device, such as, for example, a video game controller, etc., the application sends commands to the haptic actuators to produce haptic effects that are perceived by the user. The application typically generates haptic commands using function calls to haptic effects driver software or a haptic effects library. Unfortunately, during software development, the application must be repeatedly compiled and downloaded to the electronic device in order to select, develop and refine the haptic effects provided to the user. Additionally, demonstration of the effects produced by different haptic software drivers or haptic effects libraries for a particular haptic actuator is similarly constrained. Known haptic feedback evaluation kits suffer from similar, and other, deficiencies.

### SUMMARY

Embodiments of the present invention provide a system and computer-based method for controlling a haptic actuator over a network.

In one embodiment, a method for controlling a haptic actuator over a network includes, at a haptic server coupled to the network, receiving a selection of a haptic actuator connected to a haptic hardware support platform coupled to the network, receiving a selection of a haptic effect driver software package or library, receiving a selection of a haptic effect from the selected haptic effect driver software package or library, creating a haptic command message based on the selected haptic actuator, the selected haptic effect and the selected haptic effect driver software package or library, the haptic command message including haptic actuator drive values, and transmitting the haptic command message to the haptic hardware support platform over the network.

In this embodiment, the method also includes, at the haptic hardware support platform, receiving the haptic command message over the network, parsing the haptic command message to extract the haptic actuator drive values, and applying a haptic actuator drive signal to the haptic actuator to play the selected haptic effect, the haptic actuator drive signal based on the haptic actuator drive values.

It is to be understood that both the foregoing general description and the following detailed description are exemplary and explanatory and are not intended to limit the invention to the described examples.

### BRIEF DESCRIPTION OF THE DRAWINGS

FIG. 1 is a system block diagram of a cloud connected haptic system, in accordance with an embodiment of the present invention.
FIG. 2 is a system block diagram of a haptic hardware support platform, in accordance with an embodiment of the present invention.
FIG. 3 depicts a haptic communication protocol, in accordance with an embodiment of the present invention.
FIG. 4 depicts a graphical user interface for a haptic effects design application, in accordance with an embodiment of the present invention.
FIG. 5 depicts a graphical user interface for a haptic effects design application, in accordance with an embodiment of the present invention.
FIGS. 6A and 6B depict a flow chart illustrating functionality for controlling a haptic actuator over a network, in accordance with an embodiment of the present invention.

### DETAILED DESCRIPTION

Embodiments of the present invention will now be described with reference to the drawing figures, in which like reference numerals refer to like parts throughout.

Embodiments of the present invention provide a cloud connected haptic system that advantageously enables "plug-and-play" development of haptic effects for electronic devices, particularly in rapid prototyping and application development environments. Not only can different haptic actuators be connected to the system quickly and easily, but different haptic effects driver software and/or different haptic effects libraries can also be evaluated without requiring an application to be repeatedly compiled and downloaded to an electronic device.

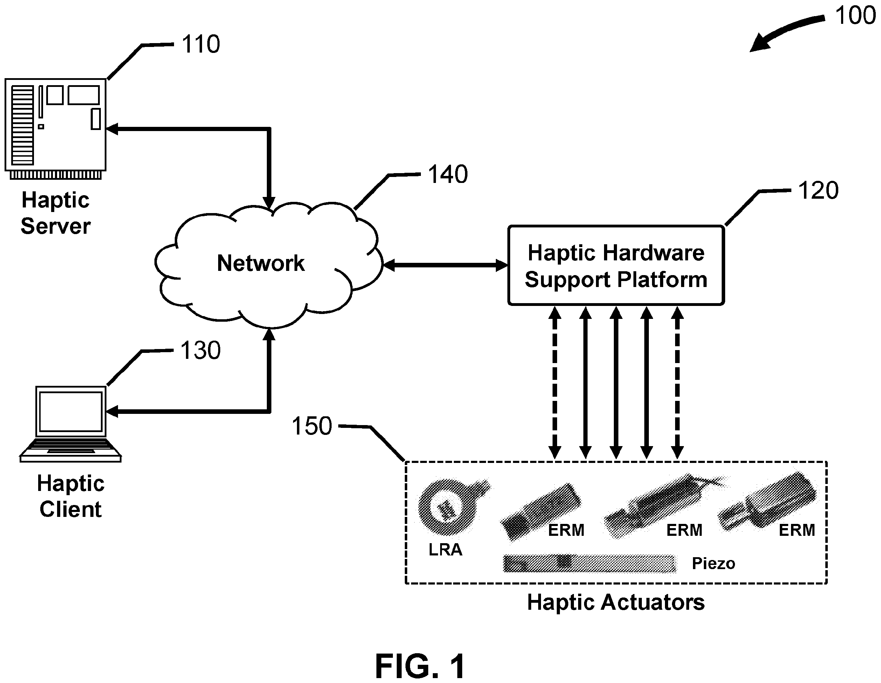

FIG. 1 is a system block diagram of a cloud connected haptic demonstration system 100, in accordance with an embodiment of the present invention.

Haptic demonstration system 100 includes haptic server (computer) 110, haptic hardware support platform 120 and haptic client (computer) 130 connected to network 140, which may include one or more local area networks, wide area networks, the Internet, etc. Further, network 140 may include various combinations of wired and/or wireless networks, such as, for example, copper wire or coaxial cable networks, fiber optic networks, Bluetooth wireless networks, WiFi wireless networks, CDMA, FDMA and TDMA cellular wireless networks, etc., which execute various network protocols, such as, for example, wired and wireless Ethernet, Bluetooth, etc.

Haptic hardware support platform 120 includes a microcontroller unit (MCU), communications interfaces and haptic driver circuits that are coupled to haptic actuators 150 using solid, stranded or braided wires, twisted pair cables, ribbon cables, etc. In one embodiment, a single haptic driver circuit is coupled to multiple haptic actuators 150 using a multiplexer, switch, etc., while in another embodiment, several haptic driver circuits are provided, and each haptic driver circuit is coupled to a single haptic actuator 150. Generally, each haptic driver circuit supports a particular type of haptic actuator 150, such as, for example, an electric motor, an electro-magnetic actuator, a voice coil, a solenoid, an eccentric rotating mass (ERM) vibration motor, a harmonic ERM motor ("HERM"), a linear resonant actuator (LRA), a piezoelectric actuator, an electroactive polymer ("EAP") actuator, a shape memory alloy, an electrostatic friction display, an ultrasonic vibration generator, a high bandwidth actuator, etc. In certain embodiments, a single haptic driver circuit may support different kinds of haptic actuators 150.

Haptic server 110 is a specifically-programmed general purpose computer that executes a haptic effects design application that communicates with an application executing on haptic client 130, and firmware executing on haptic hardware support platform 120, to configure and control a haptic effects session using haptic actuators 150. In one embodiment, the haptic effects design application is a web server application that communicates with a web browser application executing on haptic client 130. Other client-server and distributed software architectures are also contemplated by the present invention.

In a web-based embodiment, the haptic effects design application generates a graphical user interface, which is presented to the user via the browser application executing on haptic client 130, that allows the user to design one or more haptic signals for a particular haptic actuator 150 by selecting and/or customizing one or more haptic effects from a particular haptic effects driver software package or library. Different haptic effects driver software packages and libraries may be provided, which advantageously allows the user to evaluate and compare the performance of a particular haptic actuator 150 under different control regimes. For example, different haptic effects driver software packages or libraries may create haptic commands with different control fidelities, such as, for example, low fidelity haptic effects, medium fidelity haptic effects, high fidelity haptic effects, etc.

In response to user input received from the browser application executing on haptic client 130, and based on the characteristics of the particular haptic actuator 150, haptic effects design application generates a haptic command message using the selected haptic effects driver software package or library, which is transmitted from server computer 110 to haptic hardware support platform 120 over network 140 using a haptic communication protocol. Firmware executing on the microcontroller unit of the haptic hardware support platform 120 parses and decodes the haptic command message, and then generates and provides a control signal to the haptic driver circuit coupled to the particular haptic actuator 150. The haptic driver circuit generates a drive signal for the particular haptic actuator 150 in response to the control signal received from the microcontroller unit.

Typically, a single haptic actuator 150 is driven by a single haptic driver circuit during a haptic session. In some embodiments, the haptic command message may include drive values for several haptic actuators 150, while in other embodiments, several haptic command messages may be received, each one providing drive values for a single haptic actuator 150. In these embodiments, several haptic actuators 150 may be driven simultaneously during the haptic session using drive signals provided to corresponding haptic driver circuits.

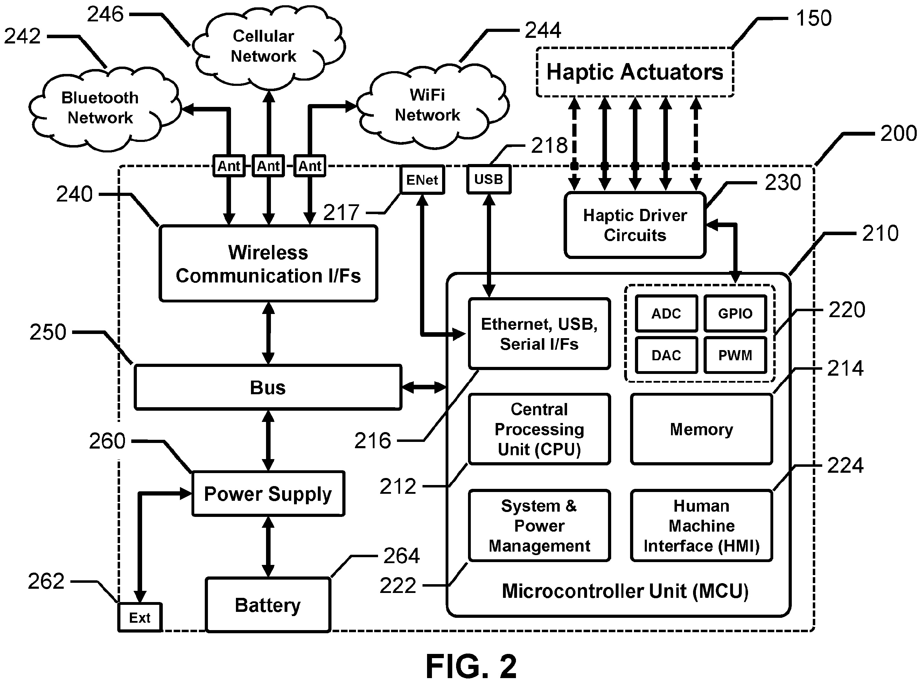

FIG. 2 is a system block diagram of a haptic hardware support platform 200, in accordance with an embodiment of the present invention.

Haptic hardware support platform 220 corresponds to the haptic hardware support platform 120 depicted in FIG. 1, and includes an MCU 210 coupled to haptic driver circuits 230, a power supply 260 coupled to an external power input connector 262, wireless communications interfaces 240 which support communications with one or more local wireless networks, such as Bluetooth network 242, WiFi network 244, cellular network 246, etc., and a bus 250, or other communication mechanism for communicating information, coupled to MCU 210, wireless communications interfaces 240 and power supply 260. The local wireless networks depicted in FIG. 2 are considered to form a portion of network 140. Power for haptic hardware support platform 220 may be provided by a rechargeable or replaceable battery 264 coupled to power supply 260, external power provided at external power input connector 262, Ethernet connector 217, Universal Serial Bus (USB) connector 218, etc.

In one embodiment, MCU 210 is a Renesas Synergy S5 microcontroller. Generally, MCU 210 includes a central processing unit (CPU) 212, memory 214 for storing information and instructions to be executed by CPU 212, and other circuitry that implements a variety of peripheral functions, such as, for example, Ethernet, USB and serial communications interfaces 216, input/output (I/O) circuitry 220, system & power management circuitry 222, human machine interface circuitry (HMI) 224 to control an optional LCD display, touch screen, etc. Memory 214 includes both volatile and non-volatile memory, such as, for example, code flash memory, data flash memory, static random access memory (SRAM), flash cache memory, etc. In certain embodiments, memory 214 stores a real time operating system (RTOS) and other firmware in non-volatile memory that provide functionality when loaded into RAM and executed by CPU 212. I/O circuitry 220 is coupled to haptic driver circuits 230, and includes general purpose I/O ports, analog to digital (A/D) converter(s), digital to analog (D/A) converter(s), pulse width modulation (PWM) timers, etc.

In certain embodiments, haptic hardware support platform 220 supports ERM vibration motors, LRAs, piezoelectric actuators, and electro-active polymer (EAP) actuators. Other embodiments support these and/or other types of haptic actuators or combinations thereof. Generally, haptic driver circuits 230 receive control signals from MCU 210, and supply the voltage and current necessary to drive haptic actuators 150.

ERM vibration motors may be used for slow, deliberate user-interface applications, such as, for example, gaming rumble effects, and provide one of the most cost-effective haptic actuators for mass-market devices. ERM vibration motors employing shaft and rotating eccentric mass are rectangular or cylindrical-shaped, with typical dimensions including a diameter of 3 mm to 8 mm (or larger), a length of 10 mm to 20 mm (or larger), and a rotating mass swing diameter of 4 mm to 7 mm (or larger). ERM vibration motors employing a shaftless design are coin-shaped, with typical dimensions including a diameter of 8 mm to 12 mm (or larger), and a length of 3 mm to 4 mm (or larger). ERM vibration motors have an operating voltage of 1.3 V to 5 V, an operating current of 75 mA to 240 mA, vibrate at frequencies of 50 Hz to 350 Hz, and have a relatively high mechanical time constant (e.g., about 50 ms).

A haptic driver circuit 230 for an ERM vibration motor includes, *inter alia,* a power amplifier, and receives a pulse-width modulated (PWM) or inter-integrated chip (I2C) control signal from MCU 210 which designates the voltage value that the power amplifier applies across the ERM vibration motor leads. The control signal is bidirectional, and positive and negative voltages can be applied. The control signal may be updated by MCU 210 at 5 ms intervals, and, at each interval, a new voltage value can be commanded.

LRAs are well-suited for haptics, and are used in many smartphones. LRAs require an AC input signal to linearly displace a damped mass / spring system at a resonant frequency. LRAs are cylindrical-shaped, with typical dimensions including a diameter of 8 mm to 10 mm, and a length of 3 mm to 4 mm. LRAs have an operating voltage of 1.8 V to 2 V, an operating current of 50 mA to 75 mA, resonate at frequencies of 150 Hz to 250 Hz, and have a mechanical time constant of about 30 ms. LRAs are durable because they have no bearings, and the parts are not subjected to friction. They are more costly than ERMs, and require more sophisticated control to prevent resonant ringing.

A haptic driver circuit 230 for an LRA includes, *inter alia,* an actuator driver amplifier chip that receives and interprets a PWM or I2C control signal from MCU 210, and then drives the LRA with a frequency that closely corresponds to the actuator's resonant frequency (typically 175 Hz). In one embodiment, a square wave is used as the control signal. The control signal may be updated at 5 ms intervals. A haptic driver circuit 230 for an LRA may have an "auto-tune" function that automatically locks on to the LRA's resonant frequency, which optimizes performance and controls the resonant ringing that often occurs with improperly-tuned LRA actuators.

Piezoelectric actuators are high-performing actuators that can be used to create high-fidelity haptic effects. Piezoelectric actuators have a matchstick-shaped form factor, typically measure about 4 x 4 x 40 mm and easily fit into tablet devices as well as new smartphone designs. Piezoelectric actuators have many advantages, including a superior mechanical time constant (less than 5 ms) which allows the creation of haptic effects as short as 2 ms in duration, which comports well with touch typing feedback. Piezoelectric actuators vibrate at a wide range of frequencies (150 Hz to 300 Hz), and create a variety of highly nuanced touch sensations. However, piezoelectric actuators require an amplifier that drives a capacitive load of roughly 50 nF at up to +/- 70 V. While the required instantaneous power draw is high, e.g., roughly 300 mA at 3V supply, piezoelectric actuators consume no more energy than an ERM vibration motor or an LRA. Piezoelectric actuators are very durable despite their inherently brittle ceramic material, and have been engineered to survive the rigorous drop test regimens typical for handheld devices.

A haptic driver circuit 230 for a Piezoelectric actuator includes, *inter alia,* a power amplifier, and receives a pulse-width modulated (PWM) or inter-integrated chip (I2C) control signal from MCU 210 that is analogous to an 8 kHz 8-bit PCM data stream.

EAP actuators have been used in high-end smartphones. An EAP actuator is a wide but very flat panel (e.g., 45 mm x 38 mm x 0.8 mm) that is affixed to an external movable mass, typically the device's own battery, which is then mounted in a sled that is engineered to resonate anywhere from 90 Hz to 125 Hz. The mechanical time constant for an EAP actuator is in the low milliseconds. EAP actuators require electronics that can generate an 800 V signal. While the sled can be challenging to integrate into very tight spaces, the actuator material itself is extremely thin and can have excellent durability. An EAP actuator offers similar performance to a piezoelectric actuator.

A haptic driver circuit 230 for an EAP actuator includes, *inter alia,* a power amplifier to generate up to 800 V, and receives a PWM or I2C control signal from MCU 210.

To begin a haptic session using a particular haptic actuator and a haptic hardware support platform 200, the user connects the leads of the particular haptic actuator to the connectors of the appropriate haptic driver circuit 230, and powers up the haptic hardware support platform 200. During the power up sequence of MCU 210, a hardware bootloader performs a boot sequence for CPU 212, which generally includes initializing the clocks, interrupts, etc. of CPU 212, as well as loading a software bootloader from memory 214, which loads software from the non-volatile portion of memory 214 into SRAM, including, for example, hardware drivers, an RTOS, etc. Once launched, the RTOS loads various haptic-related software modules from the non-volatile portion of memory 214 into SRAM, including, for example, a scheduler module, a security module, a communications handler module, a command handler module, a haptic data handler module, a haptic update time module, a haptic actuator drive control module, etc.

The scheduler module, in cooperation with the RTOS, manages the execution of the other modules, communication between the other modules, etc.

The security module authenticates, decrypts and encrypts messages exchanged between the server computer 110 and the haptic hardware support platform 200 over network 140. For example, the security module receives network messages from Ethernet I/F 216 and wireless communication I/Fs 240, authenticates and forwards the network messages to the communication handler module, receives messages from the communication handler module, encrypts and forwards them to Ethernet I/F 216 and wireless communication I/Fs 240 for transmission over network 140, etc.

The communications handler module processes messages received from, and sent to, the haptic effects design application executing on server computer 110 over network 140. These messages include haptic platform capability messages transmitted to the haptic effects design application, haptic command messages received from the haptic effects design application, etc.

For example, the communications handler module identifies and forwards haptic command messages to a command handler module, creates and forwards haptic platform capability messages to the security module for encryption, etc. In certain embodiments, command handler module parses the haptic command message, according to a haptic communication protocol, to extract haptic data from the haptic command message. The haptic data are then provided to the haptic data handler module. In certain embodiments, the haptic command message may include haptic data for several haptic actuators 150.

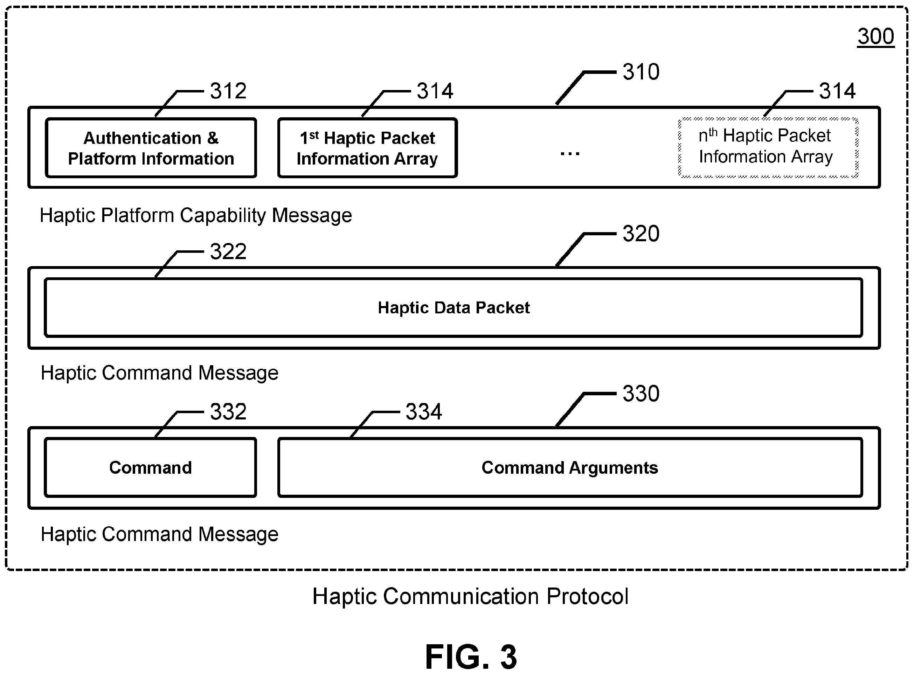

FIG. 3 depicts a haptic communication protocol, in accordance with an embodiment of the present invention.

In this embodiment, haptic communication protocol 300 includes a haptic platform capability message 310, a haptic command message 320, a haptic command message 330, etc.; other messages are also contemplated by the present invention. Haptic platform capability message 310 includes authentication and/or platform information 312 and one or more haptic packet information arrays 314. Haptic command message 320 includes a haptic data packet 322 that contains drive values for one or more haptic actuators 150. Command message 330 includes command 332 and command arguments 334.

Table 1 presents an exemplary haptic platform capability message 310, Table 2 presents an exemplary haptic packet information array 314, and Table 3 presents an exemplary haptic data packet 322, in accordance with certain embodiments of the present invention.

**Table 1 Haptic Platform Capability Message**

| **Byte Offset** | **Name** | **Description** |
|---|---|---|
| 0 | Packet ID | Unique message identifier (e.g., 0x22) |
| 1 | Hardware VID Byte 0 | Vendor ID of haptic hardware board |
| 2 | Hardware VID Byte 1 | Vendor ID of haptic hardware board |
| 3 | Hardware PID Byte 0 | Product ID of haptic hardware board |
| 4 | Hardware PID Byte 1 | Product ID of haptic hardware board |
| 5 | Library Version Lo | Minor Revision Number of haptic library |
| 6 | Library Version Hi | Major Revision Number of haptic library |
| 7-14 | Available Actuator Amplifiers | Indices of available actuator amplifiers |
| 15 | Number of Haptic Packet Information Arrays | Number (N) of haptic packet information arrays in message |
| 16 - 55 | Haptic Packet Information Array | 1^{st} haptic packet information array |
| ⋮ | ⋮ | ⋮ |
| xx - yy | Haptic Packet Information Array | N^{th} haptic packet information array |

**Table 2 Haptic Packet Information Array**

| **Byte Offset** | **Name** | **Description** |
|---|---|---|
| 0 | Actuator Index | Actuator index (e.g., 0, 1, ..., n) |
| 1 | Actuator Qualifier | Actuator type (e.g., 1=ERM, 2=LRA, 3=Piezo, 4=other, etc.) |
| 2 | Actuator Update Rate | Haptic actuator update rate (ms) |
| 3 | Number of Drive Values per Packet Byte 0 | Total number of drive values in haptic data packet for this actuator |
| 4 | Number of Drive Values per Packet Byte 1 | |
| 5 | Actuator Haptic Data Start Offset Byte 0 | Starting offset for populating haptic data for this actuator in the haptic data packet |
| 6 | Actuator Haptic Data Start Offset Byte 1 | |

**Table 3 Haptic Data Packet**

| **Byte Offset** | **Name** | **Description** |
|---|---|---|
| 0 | Packet Identifier | Unique message identifier (e.g., 0x23) |
| 1 | Payload Checksum | One byte checksum of all the bytes from byte offset 6 to end of packet |
| 2 - xx | Haptic Effect Data Block (Single Actuator) | Drive values for 1^{st} actuator (index 0) [ The location and the number of bytes for each actuator may be negotiated during the initial setup phase] |
| ⋮ | ⋮ | ⋮ |
| yy - zz | Haptic Effect Data Block (Single Actuator) | Drive values for N^{th} actuator (index n) |

The command handler module processes command messages received from the communications handler module, such as, for example, haptic command message 320, haptic command message 330, etc.

The haptic data handler module extracts the drive values for a particular haptic actuator 150 from haptic data packet 322, populates a buffer in CPU 212 or memory 214 with these drive values, and invokes the haptic update timer module and the haptic actuator drive control module to play the haptic effect.

In one embodiment, the haptic effect data block includes 8-bit unsigned drive values that determine the direction of rotation and speed of the haptic actuator 150. The range of values is [0, 255], and has different implications depending on the haptic actuator 150. For example, a unidirectional actuator only spins in one direction, so the range of drive values may be divided as follows: drive values in the range [0,127] are excluded and ignored, a drive value of 128 stops the actuator, and drive values in the range [129, 255] cause the actuator spin in a clockwise (or counterclockwise) direction, with its speed increasing as the drive value increases.

The haptic actuator drive control module translates the drive value stored in the buffer to a control signal, and provides the control signal to the haptic driver circuit 230 coupled to the haptic actuator 150. The haptic actuator drive control module also provides any additional signals that the particular haptic driver circuit 230 may need. In the embodiment described above, the haptic actuator drive control module translates 8-bit unsigned drive values to control signals, and provides the control signals to the to the haptic driver circuit 230, which drives the haptic actuator 150 using a drive signal. The control signals are provided to the haptic driver circuit 230 via one or more digital signals, such as a PWM signal, an I2C signal, etc.; alternatively, one or more analog signals may be used. The drive signal is provided to the haptic actuator 150 via an analog signal, such as a variable voltage signal, a variable current signal, etc.; alternatively, a digital signal may be used. Accordingly, the drive signal is based on the drive values, and the haptic driver circuit 230 applies the drive signal to the haptic actuator 150 to play the selected haptic effect. The execution of the haptic actuator drive control module is controlled by a haptic update interrupt signal.

The haptic update timer module controls a hardware timer on CPU 212. The hardware timer is configured to fire interrupts at every update interval for the haptic actuator 150. Different interrupts may be provided to drive different haptic actuators at different update intervals, and different haptic actuators may be driven simultaneously, sequentially, etc. When the interrupt fires, the haptic actuator drive control module translates the drive value to be applied to the haptic actuator 150 to a control signal, and then provides the control signal to the haptic driver circuit 230. In one example, the haptic actuator 150 has a 200 Hz (5 ms) update interval or rate, and a haptic effect to be generated by the haptic actuator 150 is defined by four 8-bit drive values, e.g., {20, 30, 50, 70}. In order to play this haptic effect, the haptic actuator drive control module reads a drive value from this drive value set every 5 ms, translates the drive value to a control signal, and provides the control signal to the haptic driver circuit 230, which drives the haptic actuator 150.

In this example, at time t = 0 ms, the haptic actuator drive control module translates drive value "20" into a control signal and provides the control signal to haptic driver circuit 230, which applies a drive signal to the particular haptic actuator 150. At time t = 5 ms, the haptic actuator drive control module translates drive value "30" into a control signal and provides the control signal to haptic driver circuit 230, which applies a drive signal to the particular haptic actuator 150. At time t = 10 ms, the haptic actuator drive control module translates drive value "50" into a control signal and provides the control signal to haptic driver circuit 230, which applies a drive signal to the particular haptic actuator 150. At time t = 15 ms, the haptic actuator drive control module translates drive value "70" into a control signal and provides the control signal to haptic driver circuit 230, which applies a drive signal to the particular haptic actuator 150. At time t = 20 ms, no drive value is left to read, so the particular haptic actuator 150 is disabled. In this example, the haptic update timer module is configured to fire interrupts every 5 ms so that a drive value can be read, translated to a control signal and provided to the haptic driver circuit 230 for application as a drive signal to the particular haptic actuator 150.

When the communications handler module is initially executed by the RTOS, wireless communications I/Fs 240 identifies the available local wireless networks, such as Bluetooth network 242, WiFi network 244, cellular network 246, etc., and the communications handler module then establishes a communications link or channel to server computer 110 over network 140 in accordance with the appropriate network communications protocol stacks, such as, for example, Ethernet, Bluetooth, TCP/IP, UDP, etc.

The communications handler module then sends a haptic platform capability message 310 including authentication and/or platform information 312, such as, for example, a unique platform serial number or ID, etc., to the haptic effects design application executing on server computer 110. In certain embodiments, the haptic platform capability message 310 is transmitted using a standard network communication protocol, such as, for example, FTP, TFTP, etc.; other file or message transfer protocols are also contemplated by the present invention. In some embodiments, the haptic platform capability message 310 may be encrypted prior to transmission. After the haptic server 110 receives the haptic platform capability message 310, the haptic effects design application decrypts (if necessary), authenticates and associates the haptic hardware support platform 200 with a particular user.

In some embodiments, when the communications handler module is initially executed by the RTOS, the communications handler module requests that the haptic data handler module and/or the haptic actuator drive control module determine the characteristics of the haptic actuator 150 connected to the haptic driver circuit 230. These characteristics are then provided to the communications handler module, which includes a haptic packet information array 314 corresponding to the haptic actuator 150 in the haptic platform capability message 310 sent to the haptic effects design application executing on haptic server 110 over network 140. Other characteristics may also be communicated, such as, for example, rise time, fall time, rated voltage, etc. Rise time is the time in milliseconds taken by the actuator to reach to 90% of peak acceleration starting from rest. Fall time is the time in milliseconds taken by the actuator to reach rest state from 90% peak acceleration. Rated voltage is the rated voltage/operating voltage of the actuator.

In other embodiments, multiple haptic actuators 150 may be connected to one or more haptic driver circuits 230, and the haptic handler module may determine the characteristics of these haptic actuators 150, including, for example, the number of haptic actuators 150 connected to the haptic driver circuits 230, the type of each haptic actuator 150, the characteristics of each connected haptic actuator 150, etc. These characteristics are then provided to the communications handler module, which includes a haptic packet information array 314 for each haptic actuator 150 in the haptic platform capability message 310 sent to the haptic effects design application executing on haptic server 110 over network 140.

In some embodiments, the haptic platform capability message 310 may be encrypted prior to transmission.

After the haptic server 110 receives the haptic platform capability message 310, the haptic effects design application decrypts (if necessary), and associates the characteristics of the haptic actuators 150 with the haptic hardware support platform 200.

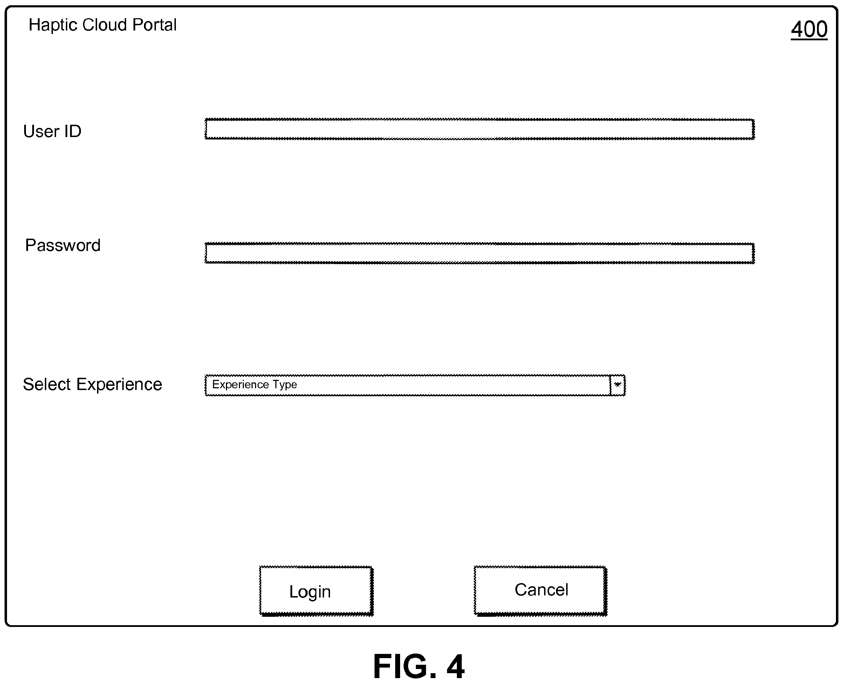

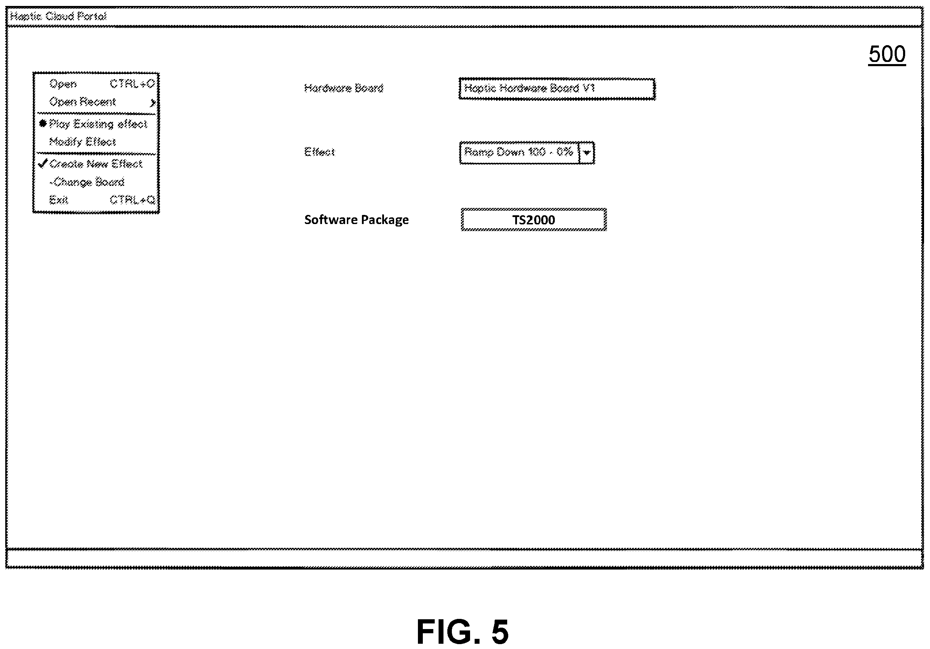

FIGS. 4 and 5 depicts a graphical user interface for a haptic effects design application, in accordance with an embodiment of the present invention.

In a web-based embodiment, the browser application executing on haptic client 130 establishes a communications link, over network 140, to the haptic effects design application executing on server computer 110. The haptic effects design application then generates graphical user interface (GUI) window 400, which is presented to the user via the browser application.

Initially, the user inputs certain credentials in GUI window 400, which are authenticated by the haptic effects design application, such as, for example, a username and password, etc. GUI window 500 is then presented to the user, which includes a list of available haptic hardware support platforms 200 associated with the user may be presented, and the user then selects the appropriate haptic hardware support platform 200 from the list. Alternatively, a single haptic hardware support platform 200 may be associated with the user, and no selection would be necessary.

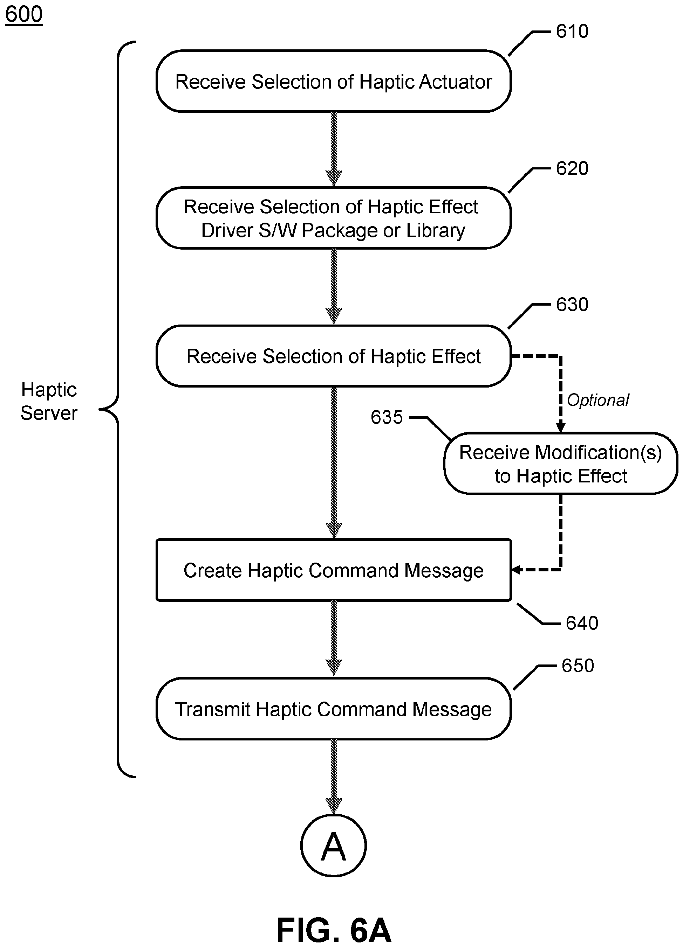

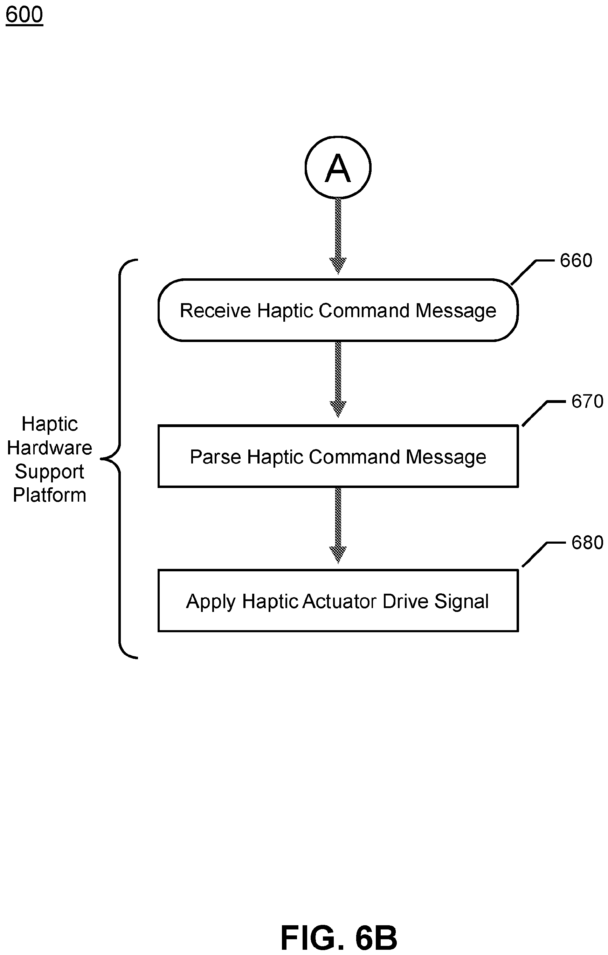

FIGS. 6A and 6B depict a flow chart illustrating functionality for controlling a haptic actuator over a network, in accordance with an embodiment of the present invention.

With respect to embodiment 600, at 610, a selection of a haptic actuator connected to a haptic actuator support platform is received at a haptic server. In certain embodiments, the user selects the particular haptic actuator 150 connected to the haptic hardware support platform 200 from a list of available haptic actuator types, using a pull-down menu, a pop-up menu, check box, etc., in GUI window 500. In some embodiments, the particular haptic actuator 150 connected to the haptic hardware support platform 200 is identified by the haptic effects design application based on characteristics provided in the haptic platform capability message 310, and the user simply confirms this information. In other embodiments, the user enters the characteristics of the particular haptic actuator 150 into various input fields in GUI window 500 (not shown), and the haptic effects design application identifies the particular haptic actuator 150 for confirmation by the user. These characteristics may include mechanical data, such as, for example, mass, shape, dimensions, etc., electrical data, such as, for example, rise time, fall time, rated voltage, etc. In other embodiments, more than one haptic actuator 150 may be selected or entered by the user, or provided by the haptic platform report message 310.

At 620, a selection of a haptic effect driver software package or library is received at the haptic server. In certain embodiments, the user selects a particular haptic effects driver software package or library from a list of available haptic effects driver software packages or libraries, using a pull-down menu, a pop-up menu, check box, etc., in GUI window 500. For example, the user may select a particular version of a haptic effects driver software package or library for a mobile device from a list of several different versions of haptic effects driver software packages or libraries. Each version may create different haptic effects, or include different types of haptic effects. Examples of different versions of haptic effects driver software packages or libraries include, but are not limited to, Immersion TS2000, TS2500, TS3000, TS4000, TS5000, etc.

At 630, a haptic effect from the selected haptic effect driver software package or library is received at the haptic server. In certain embodiments, the user selects a particular haptic effect from a list of available haptic effects using a pull-down menu, a pop-up menu, check box, etc., in GUI window 500. The haptic effects generally include, for example, clicks, ticks, bumps, up ramps, down ramps, pulses, buzzes, alerts, textures, game-related effects such as explosions, weapons, impacts, engines, etc. Each type of haptic effect may have one or more qualifiers, such as, for example, a sharp single click at high power, a strong double click at medium power, a tick at low power, etc. A portion of an exemplary haptic effect library list is provided in Table 4. In certain embodiments, more than one haptic effect can be selected for sequential playback.

**Table 4 Haptic Effect Library List (partial)**

| **ID** | **Name** | **Description** |
|---|---|---|
| 0 | Sharp Single Click - High Power | Click Effect, Narrow Pulse, 100% Power |
| 1 | Sharp Single Click - Mid Power | Click Effect, Narrow Pulse, 66% Power |
| 2 | Sharp Single Click - Low Power | Click Effect, Narrow Pulse, 33% Power |
| 3 | Strong Single Click - High Power | Click Effect, Wide Pulse, 100% Power |
| 4 | Strong Single Click - Mid Power | Click Effect, Wide Pulse, 66% Power |
| 5 | Strong Single Click - Low Power | Click Effect, Wide Pulse, 33% Power |
| 6 | Bump Click - High Power | Bump Effect, Wide Rounded Pulse, 100% Power |
| 7 | Bump Click - Mid Power | Bump Effect, Wide Rounded Pulse, 66% Power |
| 8 | Bump Click - Low Power | Bump Effect, Wide Rounded Pulse, 33% Power |
| 9 | Bounce - High Power | Bounce Effect, Long Tapered Pulse, 100% Power |
| 10 | Bounce - Mid Power | Bounce Effect, Long Tapered Pulse, 66% Power |
| 11 | Bounce - Low Power | Bounce Effect, Long Tapered Pulse, 33% Power |
| 12 | Sharp Double Click - High Power | 2 * Click Effect, Narrow Pulse, 100% Power |
| 13 | Sharp Double Click - Mid Power | 2 * Click Effect, Narrow Pulse, 66% Power |
| 14 | Sharp Double Click - Low Power | 2 * Click Effect, Narrow Pulse, 33% Power |
| 15 | Strong Double Click - High Power | 2 * Click Effect, Wide Pulse, 100% Power |
| 16 | Strong Double Click - Mid Power | 2 * Click Effect, Wide Pulse, 66% Power |
| 17 | Strong Double Click - Low Power | 2 * Click Effect, Wide Pulse, 33% Power |
| 18 | Double Bump - High Power | 2 * Bump Effect, Wide Rounded Pulse, 100% Power |
| 19 | Double Bump - Mid Power | 2 * Bump Effect, Wide Rounded Pulse, 66% Power |
| 20 | Double Bump - Low Power | 2 * Bump Effect, Wide Rounded Pulse, 33% Power |

At optional 635, one or more modifications to the selected haptic effect are received at the haptic server. In some embodiments, the user may modify the selected haptic effect using GUI window 500.

At 640, a haptic command message is created at the haptic server based on the selected haptic actuator, the selected haptic effect and the selected haptic effect driver software package or library. In certain embodiments, haptic command message 320 includes a haptic data packet 322 with a time sequence of drive values for the selected haptic actuator 150. In other words, the haptic effects design application renders the selected haptic effect by calling the selected haptic effect driver software package or library and providing the selected haptic effect and the characteristics of the selected haptic actuator 150.

At 650, the haptic command message is transmitted from the haptic server to the haptic hardware support platform over the network. As discussed above, the haptic effects design application transmits haptic command message 320 to the haptic hardware support platform 200 over network 140 using the previously established communications link or channel described above. In other embodiments, a new communications link or channel may be established between the haptic server 110 and the haptic hardware support platform 200.

At 660, the haptic command message is received over the network at the haptic hardware support platform. The communications handler module receives haptic command message 320 over network 140 using the previously established communications link or channel, or, alternatively, over a new communications link or channel, and forwards the haptic command message to the command handler module.

At 670, the haptic command message is parsed to extract the haptic actuator drive values. The command handler module parses haptic command message 320 to extract haptic data packet 322, which includes haptic actuator drive values. The command handler module then provides the haptic data packet 322 to the haptic data handler module. The haptic data handler module populates a buffer in CPU 212 or memory 214 with drive values for the particular haptic actuator 150, and invokes the haptic update timer module and the haptic actuator drive control module to play the haptic effect.

At 680, a haptic actuator drive signal is applied to the haptic actuator to play the selected haptic effect, the haptic actuator drive signal based on the haptic actuator drive values. As discussed above, in response to a haptic update interrupt signal, the haptic actuator drive control module reads a drive value from the buffer, creates, and then provides, a control signal to the haptic driver circuit 230 based on the drive value. The haptic driver circuit 230 creates and provides a drive signal to the haptic actuator 150 in response to the control signal. In other embodiments, the drive value is the control signal. Accordingly, the drive signal is always based on the drive value, whether or not an intervening control signal is employed.

The present invention advantageously allows a user to compare and contrast the quality and performance of different haptic effect driver software packages and/or libraries quickly, easily and efficiently. For example, suppose that a user wants to compare and contrast the quality and performance of Immersion's TS2000 and TS2500 software products, which are geared towards ERM actuators. To compare and contrast the haptic effects produced by these two software products, the haptic effects design application allows the user to select and/or configure a particular ERM actuator connected to the haptic hardware support platform, select the first software product (i.e., the TS2000 software product), create and then experience haptics effects for this ERM actuator. With a simple selection of the second software product (i.e., the TS2500 software product) in the haptic effects design application, new haptic effects can be created and experienced, using the TS2500 product, for this ERM actuator. In other words, the user simply "flips a switch" in the haptic effects design application to experience the difference in haptic effects created by these two products for the same ERM actuator. The user may find that the TS2500 product provides a crisper and more desirable response.

The present invention advantageously allows a user to select and configure a haptic actuator quickly, easily and efficiently as well. For example, suppose that the user wants to haptify a surface. In order to select and configure a haptic actuator, the user may input actuator characteristics, such as, for example, mass, shape, dimensions, etc., into the haptic effects design application, which determines the actuator type, manufacturer, and actuator configuration parameters. Or, the user may simply select a haptic actuator from a list provided by the haptic effects design application, which loads the related actuator configuration parameters. The user can "tweak" the actuator configuration parameters to get the desired haptic effects result instantly without the need to recompile and download source code, etc., as discussed above.

In certain embodiments, cloud connected haptic demonstration system 100 enables convenient, on-demand network access to a shared pool of configurable computing resources (e.g., networks, servers, storage, applications, and services). The services provided or accessed through the cloud (or network) are referred to as cloud services.

Services provided by cloud connected haptic demonstration system 100 can dynamically scale to meet the needs of its users. A specific instantiation of a service provided by cloud connected haptic demonstration system 100 is referred to as a "service instance." In general, any service made available to a user via a communication network, such as the Internet, from a cloud service provider's system is referred to as a "cloud service." Typically, in a public cloud environment, servers and systems that make up the cloud service provider's system are different from the customer's own personal and/or on-premises servers and systems. For example, a cloud service provider's system may host an application, and a user may, via a communication network such as the Internet, on demand, order and use the application.

Accordingly, a system and method for controlling a haptic actuator over a network are advantageously provided.

In one embodiment, the system includes a haptic server, coupled to a network, including a memory and a processor, and a haptic hardware support platform, coupled to the network and connected to a selected haptic actuator, including a memory and a processor. The haptic server processor is configured to receive a selection of the haptic actuator, receive a selection of a haptic effect driver software package or library, receive a selection of a haptic effect from the selected haptic effect driver software package or library, create a haptic command message based on the selected haptic actuator, the selected haptic effect and the selected haptic effect driver software package or library, the haptic command message including a plurality of haptic actuator drive values, and transmit the haptic command message over the network. The haptic hardware support platform processor is configured to receive the haptic command message over the network, parse the haptic command message to extract the plurality of haptic actuator drive values, and apply a haptic actuator drive signal to the haptic actuator to play the selected haptic effect, the haptic actuator drive signal based on the haptic actuator drive values.

In another embodiment, the method includes, at a haptic server coupled to a network, receiving a selection of a haptic actuator connected to a haptic hardware support platform coupled to the network, receiving a selection of a haptic effect driver software package or library, receiving a selection of a haptic effect from the selected haptic effect driver software package or library, creating a haptic command message based on the selected haptic actuator, the selected haptic effect and the selected haptic effect driver software package or library, the haptic command message including a plurality of haptic actuator drive values, and transmitting the haptic command message to the haptic hardware support platform over the network. The method also includes, at the haptic hardware support platform, receiving the haptic command message over the network, parsing the haptic command message to extract the plurality of haptic actuator drive values, and applying a haptic actuator drive signal to the haptic actuator to play the selected haptic effect, the haptic actuator drive signal based on the haptic actuator drive values.

The many features and advantages of the invention are apparent from the detailed specification, and, thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and, accordingly, all suitable modifications and equivalents may be resorted to that fall within the scope of the invention.

## Claims

1. A haptic system, comprising:
a haptic server, coupled to a network, including a memory and a processor configured to:
receive a selection of a haptic actuator,
receive a selection of a haptic effect driver software package or library,
receive a selection of a haptic effect from the selected haptic effect driver software package or library,
create a haptic command message based on the selected haptic actuator, the selected haptic effect and the selected haptic effect driver software package or library, the haptic command message including haptic actuator drive values, and transmit the haptic command message over the network; and
a haptic hardware support platform, coupled to the network and connected to the selected haptic actuator, including a memory and a processor configured to:
receive the haptic command message over the network,
parse the haptic command message to extract the haptic actuator drive values, and
apply a haptic actuator drive signal to the haptic actuator to play the selected haptic effect, the haptic actuator drive signal based on the haptic actuator drive values.

2. The system according to Claim 1, wherein the selections of the haptic actuator, haptic effect driver software package or library and haptic effect are received from a haptic client coupled to the network.

3. The system according to Claim 2, wherein the haptic server processor is further configured to:
receive modifications to the selected haptic effect from the haptic client
or
wherein the haptic server processor is further configured to:
receive a haptic platform capability message from the haptic hardware support platform, the haptic platform capability message including authentication information for the haptic hardware support platform;
authenticate the haptic hardware support platform based on the authentication information; and
associate the haptic hardware support platform with a user of the haptic client.

4. The system according to Claim 1, wherein the haptic server processor is further configured to:
receive a plurality of haptic actuator characteristics for each haptic actuator connected to the haptic hardware support platform.

5. The system according to Claim 4, wherein the plurality of haptic actuator characteristics are received, from the haptic hardware support platform, in a haptic platform capability message
or
wherein the plurality of haptic actuator characteristics are received, from the haptic hardware support platform, in a haptic platform capability message and the plurality of haptic actuator characteristics include an actuator type and an actuator update rate.

6. The system according to Claim 4, wherein the plurality of haptic actuator characteristics are received from the haptic client
or
wherein the plurality of haptic actuator characteristics are received from the haptic client and the plurality of haptic actuator characteristics include a rise time, a fall time and a rated voltage.

7. The system according to Claim 1,
wherein the haptic server processor is further configured to:
receive a selection of a new haptic effect driver software package or library,
create a new haptic command message based on the selected haptic actuator, the selected haptic effect and the new haptic effect driver software package or library, the new haptic command message including new haptic actuator drive values, and
transmit the new haptic command message to the haptic hardware support platform over the network; and
wherein the haptic hardware support platform processor is further configured to:
receive the new haptic command message over the network,
parse the new haptic command message to extract the new haptic actuator drive values, and
apply a new haptic actuator drive signal to the haptic actuator to play the selected haptic effect, the new haptic actuator drive signal based on the new haptic actuator drive values.

8. A computer-based method for controlling a haptic actuator over a network, the method comprising:
at a haptic server coupled to a network:
receiving a selection of a haptic actuator,
receiving a selection of a haptic effect driver software package or library,
receiving a selection of a haptic effect from the selected haptic effect driver software package or library,
creating a haptic command message based on the selected haptic actuator, the selected haptic effect and the selected haptic effect driver software package or library, the haptic command message including haptic actuator drive values, and transmitting the haptic command message over the network; and
at a haptic hardware support platform coupled to the network and connected to the selected haptic actuator:
receiving the haptic command message over the network,
parsing the haptic command message to extract the haptic actuator drive values, and
apply a haptic actuator drive signal to the haptic actuator to play the selected haptic effect, the haptic actuator drive signal based on the haptic actuator drive values.

9. The computer-based method according to Claim 8, wherein the selections of the haptic actuator, haptic effect driver software package or library and haptic effect are received from a haptic client coupled to the network.

10. The computer-based method according to Claim 9, further comprising at the haptic server:
receiving modifications to the selected haptic effect from the haptic client
or
further comprising at the haptic server:
receiving a haptic platform capability message from the haptic hardware support platform, the haptic platform capability message including authentication information for the haptic hardware support platform;
authenticating the haptic hardware support platform based on the authentication information; and
associating the haptic hardware support platform with a user of the haptic client.

11. The computer-based method according to Claim 8, further comprising at the haptic server:
receiving a plurality of haptic actuator characteristics for each haptic actuator connected to the haptic hardware support platform.

12. The computer-based method according to Claim 11, wherein the plurality of haptic actuator characteristics are received, from the haptic hardware support platform, in a haptic platform capability message
or
wherein the plurality of haptic actuator characteristics are received, from the haptic hardware support platform, in a haptic platform capability message and the plurality of haptic actuator characteristics include an actuator type and an actuator update rate.

13. The computer-based method according to Claim 11, wherein the plurality of haptic actuator characteristics are received from the haptic client.

14. The computer-based method according to Claim 13, wherein the plurality of haptic actuator characteristics include a rise time, a fall time and a rated voltage.

15. The computer-based method according to Claim 8, further comprising:
at the haptic server:
receiving a selection of a new haptic effect driver software package or library,
creating a new haptic command message based on the selected haptic actuator, the selected haptic effect and the new haptic effect driver software package or library, the new haptic command message including new haptic actuator drive values, and
transmitting the new haptic command message to the haptic hardware support platform over the network; and
at the haptic hardware support platform:
receiving the new haptic command message over the network,
parsing the new haptic command message to extract the new haptic actuator drive values, and
apply a new haptic actuator drive signal to the haptic actuator to play the selected haptic effect, the new haptic actuator drive signal based on the new haptic actuator drive values.
